# EUROPÄISCHE PATENTANMELDUNG

(11) **EP 1 653 202 A1**
(43) Veröffentlichungstag der Anmeldung: **03.05.2006**
(21) Anmeldenummer: 04090385.8
(22) Anmeldetag: 11.10.2004
(51) Int. Cl.: G01F 13/00, G01F 25/00, G01B 11/04

(54) **Verfahren und Anordnung zur Messung eines Volumenstromes auf Gurtförderer**

(71) Anmelder: Schmidt, Robert, 4050 Traun (AT); Schmidt, Alexander Oliver, 4050 Traun (AT); Rittmann, Astrid, 4050 Traun (AT)
(72) Erfinder: Rauhöft, Wolfgang, 03046 Cottbus (DE); Rittmann, Astrid, 4050 Traun (AT); Schmidt, Robert, 4050 Traun (AT)
(74) Vertreter: Seltmann, Reinhard

(57) **Zusammenfassung**

Die Erfindung betrifft ein Verfahren und eine Anordnung zur Messung eines Volumenstromes auf Gurtförderanlagen, bei der eine technisch bedingte Fehlerquote weiter reduziert ist. Die Aufgabe wird gelöst, indem bei einer Gurtförderanlage mittels optischen Messverfahrens über einen Sensor mit strichartig ausgebildeter Lichtaustrittsfläche beim Bewegungsfortschritt des Gurtförderers der Abstand zwischen Sende- und Reflexionsfläche gepulst ermittelt, gewonnene reflektierte Werte zur Ermittlung des sich daraus ergebenden Querprofiles auf bekanntem Wege einer Auswerteeinheit übergeben werden, zeitgleich in der Mittelspur des Gurtförderers mittels akustischen Messverfahrens ein weiterer einem Abstand zwischen zugehörigem Sender und Reflexionsfläche entsprechender Wert gepulst ermittelt und der Auswerteeinheit zum Vergleich aufgegeben (Fig. 1).

## Beschreibung

Die Erfindung betrifft ein Verfahren und eine Anordnung zur Messung eines Volumenstromes auf Gurtförderanlagen, vorzugsweise auf Förderbändern, mit denen Schüttgüter transportiert werden.

In grösseren Umschlagstationen, in denen mittels Gurtförderanlagen grössere Mengen von Schüttgütern, vorzugsweise gebrochenes Gestein, Kohle oder Erz umgeschlagen werden, ist es zur Kontrolle der Betriebs- und Verladevorgänge erforderlich, das transportierte Volumen je Zeiteinheit festzustellen. Dazu wurden bereits eine Reihe von Möglichkeiten vorgeschlagen.

So sieht eine Lösung gemäss der GB-Schrift 1 346 566 vor, durch mechanisch aufgebaute und wirkende Sensoren festzustellen, ob überhaupt ein Beladungszustand gegeben ist oder nicht.

Allgemein bekannt ist es, die Gamma-Energie-Transmissionstechnik zum Durchstrahlen der transportierten Schüttgüter einzusetzen, wie das beispielhaft in den DE-Schriften 297 19 600 U 1 und 42 30 626 C 2 vorgeschlagen wird.

Zunächst handelt es sich bei der Lösung gemäss DE 297 129 600 U 1 um ein Strahlungsmessgerät für die Erfassung von Inhomogenitäten. Eine Geometriebestimmung erfolgt mittels eines feststehenden Strahlungselements, sodass nur eine Mittelwertbildung des Gesamtprofils gegeben ist. Dadurch ist die Funktion der Bestimmung von Inhomogenitäten in Frage gestellt.

Bei DE 42 30 626 C 2 erfolgt eine Entfernungsbestimmung des oberen Profils des Schüttgutes durch mindestens 3 Ultraschallsensoren, die synchronisiert werden müssen, wobei die Laufzeit des Schalls als Ausgangsgrösse zur Bestimmung des Schüttgutprofiles herangezogen wird. Zusätzlich ist ein Strahlungsmessgerät (Durchstrahlung) zur Bestimmung des Massenstromes vorhanden.

Bei beiden Lösungen wird ein Vergleich zwischen dem unter dem Fördergutstrom empfangenen Wert und dem Ausgangswert herbeigeführt und es werden über bisher bekannte Vergleichswerte Rückschlüsse auf die Beschaffenheit des Fördergutstromes gezogen. Zum einen entstehen nur Näherungswerte, zum anderen sind oberhalb und unterhalb des Fördergurtes Anbauten erforderlich. Durch Benutzung der Gamma-Strahlung sind besondere Schutzmassnahmen erforderlich, insbesondere gegen nicht auszuschliessende und schädliche Streuwerte.

In einem Vorschlag gemäss DE 195 05 509 C 2 wird die Volumenbestimmung von Stückgütern auf Förderern durch Abtasten mittels Messstrahlen vorgeschlagen, indem Breite und Höhe des Stückgutes ermittelt werden. Es ist nur eine "Quasi-kontinuierliche" Messung möglich. Ungenauigkeiten sind bei einer Lageverschiebung des Stückgutes vorhanden, die durch mehrere horizontal und/oder vertikal wirkende Sensoren kompensiert werden sollen.

Nach der DE 199 47 739 A 1 wird ein Verfahren zum Verladen von Schüttgütern vorgeschlagen, bei dem zunächst die Querschnittsfläche eines verfahrbaren Behälters durch einen über dessen Boden befindlichen Sensor, der auch ein Laserscanner sein kann, vorbestimmt wird. Des weiteren ist ein Sensor vorhanden, der die Länge des zu beladenden Behältnisses ermittelt, sodass das Volumen ermittelbar ist und als Grösse für die Ermittlung des Zeitquerschnitts der Öffnung einer Beladeeinrichtung zur Verfügung gestellt und diese gesteuert werden kann.

Nach der Schrift AT 005 728 wird vorgeschlagen, über einem Gurtförderer eine Vielzahl feststehender nach dem Triangulationsprinzip arbeitender Sensoren anzuordnen, um das Profil des auf dem Gurtförderer befindlichen Schüttgutes zu ermitteln. In Abhängigkeit des zeitlichen Verlaufes werden Rückschlüsse auf das Volumen gezogen. Die Genauigkeit ist zum einen von der Vielzahl der Sensoren abhängig, indem die Genauigkeit mit deren steigender Anzahl zunimmt und zum anderen von der Berücksichtigung der Laufzeit, wobei der Zustand eines leeren Bandes nicht zweifelsfrei ermittelbar ist.

Aufgabe der Erfindung ist es deshalb ein Verfahren und eine Einrichtung für die Volumenstrommessung auf Gurtförderanlagen zu entwickeln, bei der eine technisch bedingte Fehlerquote weiter reduziert ist.

Die Aufgabe wird gelöst, indem bei einer Gurtförderanlage, bei der der Volumenstrom zu transportierender Schüttgüter, wie Kohle, Erze und dergleichen zu ermitteln ist, von oberhalb der betroffenen Gurtförderanlage mittels eines optischen Messverfahrens über einen Sensor mit strichartig ausgebildeter Lichtaustrittsfläche, wobei die strichartig ausgebildete Lichtaustrittsfläche mit ihrer Längsmittelachse in Förderrichtung des zu ermittelnden Schüttgutvolumens ausgerichtet ist und zu unterschiedlichen Zeiten die gesamte nutzbare Breite des Gurtförderers zeitbezogen bei dessen Bewegungsfortschritt überstreichend ausgebildet ist, der Abstand zwischen Sende- und Reflexionsfläche gepulst ermittelt und die gewonnenen reflektierten Werte zur Ermittlung des sich daraus ergebenden Querprofiles auf bekanntem Wege einer Auswerteeinheit übergeben werden, zeitgleich in der Mittelspur des Gurtförderers mittels eines akustischen Messverfahrens ein weiterer einem Abstand zwischen zugehörigem Sender und Reflexionsfläche entsprechender Wert gepulst ermittelt und der Auswerteeinheit zum Vergleich mit dem durch den Sensor mit strichartig ausgebildeter Lichtaustrittsfläche ermittelten Wert aufgegeben und bei Fehlermeldung des nach dem optischen Messverfahrens arbeitenden Sensors, wie das beispielsweise bei hochglatten Oberflächen eintreten kann, der vom mittels des akustischen Messverfahrens arbeitenden Sensor ermittelte Wert für die weitere Bewertung des Betriebszustandes präferiert wird.

Eine erfindungsgemässe Einrichtung ist so aufgebaut, dass über dem mit Schüttgut und dergleichen belasteten Gurtförderer als nach dem optischen Messverfahren arbeitendem Sensor ein Laser mit vorzugsweise hochauflösender Diodenzeile und gepulst arbeitend in Abhängigkeit von der Fördergeschwindigkeit des Gurtförderers aus der Vertikalen heraus quer zur Förderrichtung des Gurtförderers hin- und herschwenkend ausgebildet angeordnet ist, der eine rechteckförmige Lichtaustrittsfläche aufweist, die mit ihrer Mittellängsachse in Förderrichtung ausgerichtet ist. Dadurch werden Messfehler weitestgehend eliminiert.

Entsprechend des Abstandes der Auftreff- und Reflexionsfläche wird ein Wert gewonnen, der dem Abstand der Reflexionsfläche auf dem Schüttgut von der Lichtaustrittsfläche des Lasers proportional ist. Im weiteren ist der Laser mit vorzugsweise hochauflösender Diodenzeile schwenkend und gepulst arbeitend ausgebildet. Vorzugsweise ist ein solcher Laser ausgebildet, der eine hohe Fremdlichtunterdrückung aufweist.

Die Geschwindigkeit des Hin- und Herschwenkens des Lasers wird durch die in Förderrichtung des Gurtförderers verlaufende nutzbare Länge seines Lichtaustritts und der Fördergeschwindigkeit des Gurtförderers bestimmt.

Die vom nach dem optischen Messverfahren arbeitenden Laser gewonnenen Werte werden, wie bereits beschrieben, der Auswerteeinheit übergeben.

Des weiteren ist mittig über dem Gurtförderer als nach einem akustischen Messverfahren arbeitendes Element ein Ultraschallsensor vorzugsweise fest angeordnet und auf die Flächen gerichtet, die ebenfalls vom Laser bewertet werden. Dieser weist ebenso vorzugsweise einen leicht kegelförmigen Schallaustritt auf und ist gepulst arbeitend ausgebildet. Je enger dessen Kegelwinkel ist, desto besser ist die Referenz der gewonnenen Werte. Wird der Kegelwinkel zu gross gestaltet, nimmt die Fehlergrösse der Messwerte zu.

Die mittels des Ultraschallverfahrens gewonnenen Werte werden ebenso der Auswerteeinheit übergeben und einer vergleichenden Bewertung unterzogen. Zeigt der Laser statt eines primären Wertes einen Fehler an, wird der Wert des Ultraschallsensors sekundär berücksichtigt und zur Bewertung übernommen.

Da sich Laser und Ultraschallsensor nicht beeinflussen, können beide taktgleich betrieben werden.

Die Kombination beider Systeme, die separat nahezu bekannt sind, sowie die erfindungsgemässe Ausgestaltung insbesondere des Lasersensors, führen zu einer Volumenstrommessung, bei der Fehler weiter reduziert sind. Bei Anwendung eines punktförmigen Messverfahrens und einer dementsprechend aufgebauten Einrichtung können durch einzelne oberflächenhaft bedingte Ablenkungen Nullwerte als Reflexionswert auftreten, da Abschattungen und Schattierungen ebenso immer zu irregulären Werten führen. Dieser Mangel wird insoweit beseitigt, als bei Vorhandensein von Schüttgut bei einem strichförmigen Erfassen immer ein Wert erfasst wird.

Die Erfindung soll im folgenden an einem Ausführungsbeispiel näher beschrieben werden.

In der zugehörigen Zeichnung zeigt
- Fig. 1: das Funktionsprinzip einer prinzipiellen Anordnung zur Volumenstrommessung auf einem Gurtförderer, ergänzt durch die Erfassungslinien,
- Fig. 2: die Draufsicht auf den Abshncitt eines Gurtförderers unter Berücksichtigung der Ausgestaltung nach Fig. 1 mit den zugehörigen Erfassungslinien,

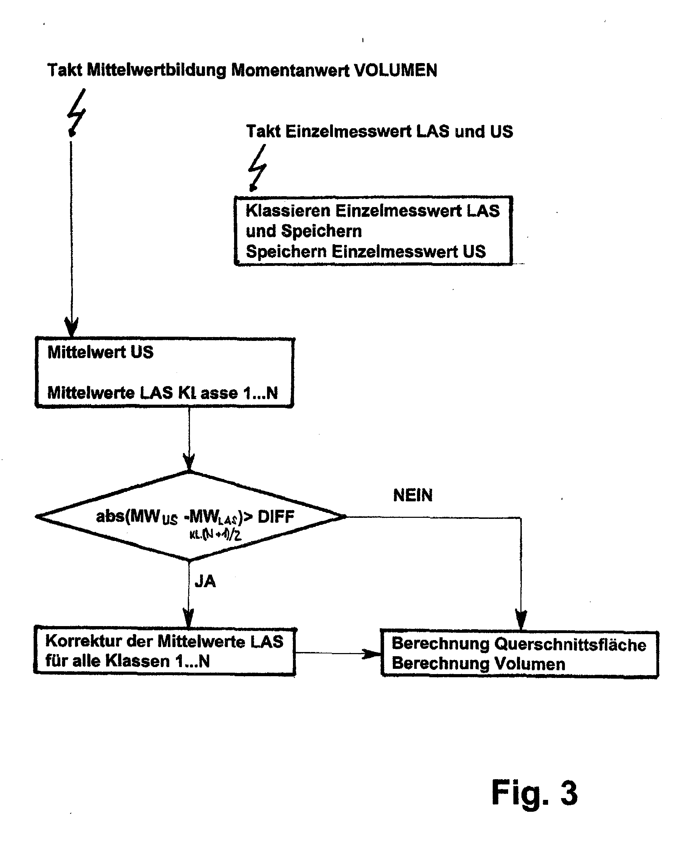

- Fig. 3: die prinzipielle Darstellung der Durchführung der Plausibilitätskontrolle.

Die Einsatzbedingungen für einen Gurtförderer 3 sind dadurch gekennzeichnet, dass in einer Hafenanlage über diesen häufig grössere Mengen Phosphat in Schiffe verladen werden.

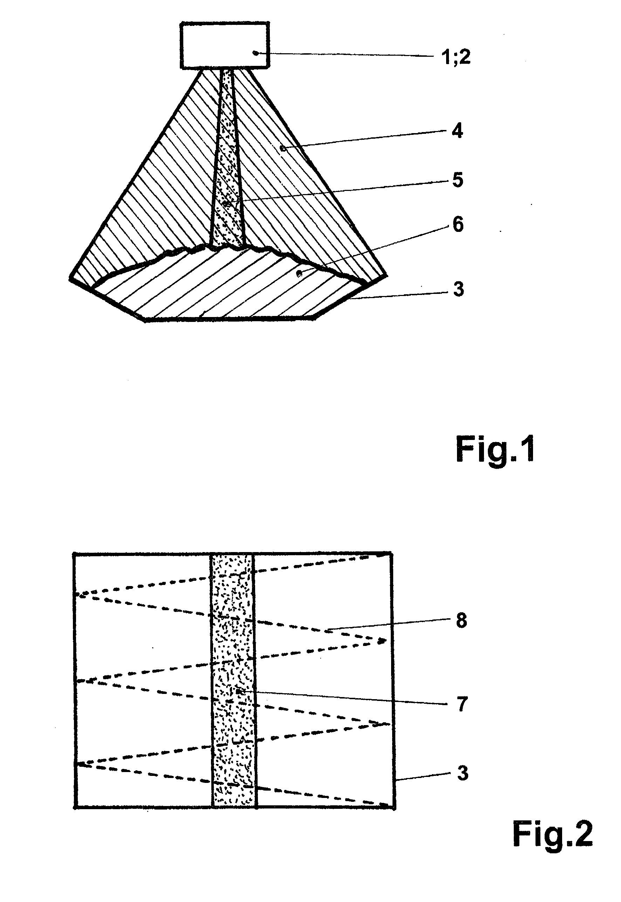

Über dem Gurtförderer 3 sind berührungslose Messeinrichtungen mit dem Rahmen des Gurtförderers 3 verschraubt angebracht wie prinzipiell aus Fig. 1 ersichtlich. Zum einen handelt es sich um einen nach einem optischen Messverfahren arbeitenden Sensor 1, der eine strichförmige Lichtaustrittsfläche aufweisend ausgebildet und als nach einem optischen Messverfahren arbeitende Lasermesseinrichtung LAS mit dem zugehörigen Erfassungsbereich 4, wobei der nach einem optischen Messverfahren arbeitende Sensor 1 quer zum Gurtförderer 3 schwenkbar ausgestaltet ist, zum anderen um eine nach einem akustischen Messverfahren arbeitende Ultraschallmesseinrichtung US in Gestalt eines nach einem akustischen Messverfahren arbeitendem Sensor 2 mit dem zugehörigen Erfassungsbereich 5.

Der nach einem optischen Messverfahren arbeitende Sensor 1 mit seinem Messpunkt LAS befindet sich während der Messung in einer kontinuierlichen Schwenkbewegung quer zur Förderrichtung des Gurtförderers 3 mit ständig wechselnder oszillierender Schwenkbewegung. Durch eine steuerbare Schwenkumrichtungsschaltung wird der Messpunkt LAS ständig zwischen den äusseren Kanten des Gurtförderers 3 in einer kontinuierlichen Bewegung hin- und her geschwenkt, sodass sich über den Erfassungsbereich 4 eine Erfassungslinie 8 wie in Fig. 2 dargestellt, ergibt. Dadurch wird eine Erfassung des gesamten Volumenstromes des Fördergutes 6 erreicht.

Der nach einem akustischen Messverfahren arbeitende Sensor 2 beziehgunsgweise US ist beispielhaft in der Mittelposition fest montiert und dient mit seinem Erfassungsbereich 5 zur Kontrolle des Lasermesswertes im Mittelbereich 7 des Querschnitts des Gurtförderers 3.

Für die Bestimmung der Gurtfördergeschwindigkeit ist ein Näherungssensor mit entsprechendem Auslöseelement an der Umlenkrolle des Gurtförderers 3 angebracht. Das Auslöseelement liefert je Umdrehung der Umlenkrolle einen Spannungsimpuls. Die Zeit zwischen zwei 2 Spannungsimpulsen wird in der mit der den Messeinrichtungen verbundenen Auswerteeinheit rechentechnisch ermittelt. Da durch die geometrische Anordnung des Auslöseelements die zurückgelegte Wegstrecke bekannt ist, kann aus den beiden Grössen Wegstrecke und Zeit die Geschwindigkeit des Gurtförderers 3 direkt ermittelt werden.

Zur Erhöhung der Erfassungsgenauigkeit können ebenfalls mehrere Auslöseelemente an der Umlenkrolle angebracht werden.

Die von LAS und US erhaltenen Sensorsignale werden direkt proportional in eine Pulsfrequenz digitalisiert. Diese digitalisierten Signale werden direkt zu einer in die Gurtfördereranlage integrierten Auswerteeinheit übertragen, für die rechentechnische Auswertung erfasst und als binärer Zahlenwert für die weitere Bewertung zur Verfügung gestellt. Sie werden im weiteren mit mathematischen Funktionen zu den Abstandsmesswerten A(LAS) und A(US) gewandelt. Durch vorher ermittelte Abstandsmesswerte A(LAS TARA) und A(US TARA) bei leerem Gurtförderer 3 kann sofort die Schichthöhe im Messtakt "x" bestimmt und zeitlich geordnet zwischengespeichert werden. Der Zeitpunkt der Messwerterfassung wird durch die Taktung des Antriebes für die Ausrichtung des Sensors LAS bestimmt.

Mit Hilfe von Klassierung und Mittelwertbildung wird der Querschnitt des Gurtförderers 3 abschnittsweise erfasst. Aus dem Querschnitt des Volumenstromes und der Bandgeschwindigkeit wird das durchschnittliche Fördervolumen für den voreinstellbaren Zyklus mathematisch ermittelt und als Momentanwert Volumen bereitgestellt.

Durch den nach einem akustischen Messverafhren arbeitenden Sensor 2 beziehungsweise US wird die durchschnittliche Schütthöhe im Erfassungswinkel, der beispielhaft mit 10 Winkelgrad ausgelegt ist, ebenfalls im Messtakt "x" erfasst und zeitlich geordnet gespeichert. Mit Hilfe der zwischengespeicherten Messwerte der Sensoren LAS und US kann nun eine Plausibilitätskontrolle durchgeführt werden. Hierfür werden alle Messwerte des Sensors US gemittelt und mit dem für einen Zeitabschnitt Delta T gültigen Mittelwert der Messwerte US verglichen. Ist die absolute Differenz dieser beiden Mittelwerte grösser als ein vorgegebener Grenzwert, werden die Messwerte LAS in direkter Abhängigkeit zu der ermittelten Differenz korrigiert. Damit liegt ein Ergebnis vor, dessen Grösse den Realverhältnissen unter jeglichen Förderbedingungen entspricht.

### Bezugszeichen:

- nach einem optischen Messverfahren arbeitender Sensor: 1
- nach einem akustischen Messverfahren arbeitender Sensor: 2
- Gurtförderer: 3
- Erfassungsbereich des nach einem optischen Messverfahren arbeitenden Sensor: 4
- Erfassungsbereich des nach einem akustischen Messverfahren arbeitenden Sensors: 5
- Fördergut: 6
- Mittelbereich: 7
- Erfassungslinie: 8

## Patentansprüche

1. Verfahren zur Messung eines Volumenstromes auf Gurtförderern (3), mit denen Schüttgüter transportiert werden, indem bei dem Gurtförderer (3) von oberhalb des betroffenen Gurtförderers (3) mittels eines optischen Messverfahrens über einen Sensor (1), der eine strichförmige Lichtaustrittsfläche aufweisend ausgebildet ist, diese mit ihrer Längsmittelachse in Förderrichtung des zu ermittelnden Schüttgutvolumens ausgerichtet ist und zu unterschiedlichen Zeiten die nutzbare Breite des Gurtförderers (3) zeitbezogen bei dessen Bewegungsfortschritt überstreichend ausgebildet ist, der Abstand zwischen Sender (1) und Reflexionsfläche gepulst ermittelt und die gewonnenen reflektierten Werte zur Ermittlung des sich daraus ergebenden Querprofiles auf bekanntem Wege einer Auswerteeinheit übertragen werden, zeitgleich in der Mittelspur des Gurtförderers (3) mittels eines nach einem akustischen Messverfahrens arbeitenden Sensor (2) ein weiterer einem Abstand zwischen zugehörigem Sender (2) und Reflexionsfläche entsprechender Wert gepulst ermittelt und der Auswerteeinheit zum Vergleich mit dem durch den optischen, eine strichförmige Lichtaustrittsfläche aufweisenden Sensor (1) ermittelten Werten aufgegeben und bei Anzeige eines Fehlers durch den nach dem optischen Messverfahren arbeitenden Sensor (1) der vom mittels des akustischen Messverfahrens arbeitenden Sensor (2) ermittelte Wert für die weitere Bewertung des Betriebszustandes präferiert wird.

2. Verfahren nach Anspruch 1, bei dem das optische und das akustische Messverfahren taktgleich betrieben werden.

3. Einrichtung zur Durchführung des Verfahrens nach Anspruch 1, bei der über einem mit Schüttgut und dergleichen belasteten Gurtförderer (3) als nach dem optischen Messverfahren arbeitender Sensor (1) ein gepulst arbeitender Laser in Abhängigkeit von der Fördergeschwindigkeit des Gurtförderers (3) aus der Vertikalen heraus quer zur Förderrichtung des Gurtförderers (3) hin- und herschwenkend ausgebildet angeordnet ist, dieser Laser eine strichförmige Lichtaustrittsfläche aufweist, die mit ihrer Mittellängsachse in Förderrichtung des Gurtförderers (3) ausgerichtet ist, des weiteren mittig über dem Gurtförderer (3) als nach einem akustischen Messverfahren arbeitender Sensor (2) ein Ultraschallsensor auf die ebenfalls vom Laser bewerteten Flächen gerichtet angeordnet und gepulst arbeitend ausgebildet ist und Laser sowie Ultraschall-Sensor zur Verarbeitung der gewonnenen Werte mit einer Auswerteeinheit verbunden sind.

4. Einrichtung nach Anspruch 3, bei der der Laser als hochauflösende Diodenzeile ausgebildet ist.

5. Einrichtung nach einem der Ansprüche 3 oder 4, bei der der Laser ein solcher ist, der eine hohe Fremdlichtunterdrückung aufweist.

6. Einrichtung nach einem der Ansprüche 3 bis 5, bei der der Ultraschallsensor fest angeordnet ist.

7. Einrichtung nach einem der Ansprüche 3 bis 5, bei der der Ultraschallsensor verstellbar angeordnet ist.

8. Einrichtung nach einem der Ansprüche 3 bis 7, bei der der Ultraschallsensor einen kegelförmigen Schallaustritt aufweist.
